# EUROPEAN PATENT APPLICATION

(11) **EP 4 250 229 A1**
(43) Date of publication of application: **27.09.2023**
(21) Application number: 21894521.0
(22) Date of filing: 10.11.2021
(51) Int. Cl.: G06T 7/20, G06F 3/01, G06F 3/0346

(54) **INFORMATION PROCESSING DEVICE, SYSTEM, INFORMATION PROCESSING METHOD, AND INFORMATION PROCESSING PROGRAM**

(30) Priority: 17.11.2020 JP 2020191104
(71) Applicant: Sony Interactive Entertainment Inc., Tokyo 108-0075 (JP)
(72) Inventor: MIZUNO Masayoshi, Tokyo 108-0075 (JP); EGAWA Naoki, Tokyo 108-0075 (JP); NAGANUMA Hiromasa, Tokyo 108-0075 (JP)
(74) Representative: Müller Hoffmann & Partner
(86) International application number: PCT/JP2021/041256
(87) International publication number: WO 2022/107647

(57) **Abstract**

Provided is an information processing device including a detection unit that detects a detection target on the basis of a first image signal generated by a first image sensor, a setting unit that sets a region of interest including at least a part of the detection target, a tracking unit that tracks the detection target in the region of interest on the basis of a second image signal generated by a second image sensor including an event driven vision sensor that asynchronously generates an image signal when an intensity change in light incident to each pixel is detected, and a comparison unit that compares position information on the detection target represented by a result of the detection by the detection unit on the basis of the first image signal with position information on the detection target represented by a result of the tracking by the tracking unit on the basis of the second image signal associated with the first image signal.

## Description

### [Technical Field]

The present invention relates to an information processing device, a system, an information processing method, and an information processing program.

### [Background Art]

There has been known an event driven vision sensor including pixels each asynchronously generating a signal when the pixel detects a change in intensity of incident light. The event driven vision sensor is advantageous in such a point that the event driven vision sensor can operate at a low power and at a high speed compared with a frame-based vision sensor, specifically, an image sensor such as a CCD (Charge Coupled Device) or a CMOS (Complementary Metal Oxide Semiconductor) which scans all pixels at each predetermined cycle. A technology relating to such an event driven vision sensor is described in, for example, PTL 1 and PTL 2.

### [Citation List]

### [Patent Literature]

[PTL 1]
   JP-2014-535098 T
[PTL 2]
   JP-2018-85725 A

### [Summary]

### [Technical Problem]

The above-mentioned advantage of the event driven vision sensor has been known, but it is hard to say that a method of using the event driven vision sensor in combination with another device has sufficiently been suggested.

In view of the foregoing problem, a purpose of the present invention is to provide an information processing device, a system, an information processing method, and an information processing program capable of using a sensor which synchronously generates an image signal and an event driven vision sensor to carry out tracking, to thereby precisely carry out the tracking while suppressing latency.

### [Solution to Problem]

According to one aspect of the present invention, provided is an information processing device including a detection unit that detects a detection target on the basis of a first image signal generated by a first image sensor, a setting unit that sets a region of interest including at least a part of the detection target, a tracking unit that tracks the detection target in the region of interest on the basis of a second image signal generated by a second image sensor including an event driven vision sensor that asynchronously generates an image signal when an intensity change in light incident to each pixel is detected, and a comparison unit that compares position information on the detection target represented by a result of the detection by the detection unit on the basis of the first image signal with position information on the detection target represented by a result of the tracking by the tracking unit on the basis of the second image signal associated with the first image signal.

According to another aspect of the present invention, provided is an information processing device including a detection unit that detects a detection target on the basis of a first image signal generated by a first image sensor, a setting unit that sets a region of interest including at least a part of the detection target, and a tracking unit that tracks the detection target in the region of interest on the basis of a second image signal generated by a second image sensor including an event driven vision sensor that asynchronously generates an image signal when an intensity change in light incident to each pixel is detected and a result of the detection by the detection unit on the basis of the first image signal associated with the second image signal.

According to still another aspect of the present invention, provided is a system including an information processing device that includes a first image sensor that generates a first image signal, a second image sensor that includes an event driven vision sensor that asynchronously generates a second image signal when an intensity change in light incident to each pixel is detected, a detection unit that detects a detection target on the basis of the first image signal, a setting unit that sets a region of interest including the detection target, a tracking unit that tracks the detection target in the region of interest on the basis of the second image signal, and a comparison unit that compares position information on the detection target represented by a result of the detection by the detection unit on the basis of the first image signal with position information on the detection target represented by a result of the tracking by the tracking unit on the basis of the second image signal associated with the first image signal.

According to still another aspect of the present invention, provided is a system including an information processing device that includes a first image sensor that generates a first image signal, a second image sensor that includes an event driven vision sensor that asynchronously generates a second image signal when an intensity change in light incident to each pixel is detected, a detection unit that detects a detection target on the basis of the first image signal, a setting unit that sets a region of interest including the detection target, and a tracking unit that tracks the detection target in the region of interest on a basis of the second image signal and a result of the detection by the detection unit on the basis of the first image signal associated with the second image signal.

According to still another aspect of the present invention, provided is an information processing method including a first reception step of receiving a first image signal acquired by a first image sensor, a second reception step of receiving a second image signal generated by a second image sensor that includes an event driven vision sensor that asynchronously generates an image signal when an intensity change in light incident to each pixel is detected, a detection step of detecting a detection target on the basis of the first image signal, a setting step of setting a region of interest including at least a part of the detection target, a tracking step of tracking the detection target in the region of interest on the basis of the second image signal, and a comparison step of comparing position information on the detection target represented by a result of the detection by the detection step on the basis of the first image signal with position information on the detection target represented by a result of the tracking by the tracking step on the basis of the second image signal associated with the first image signal.

According to still another aspect of the present invention, provided is an information processing method including a first reception step of receiving a first image signal acquired by a first image sensor, a second reception step of receiving a second image signal generated by a second image sensor that includes an event driven vision sensor that asynchronously generates an image signal when an intensity change in light incident to each pixel is detected, a detection step of detecting a detection target on the basis of the first image signal, a setting step of setting a region of interest including at least a part of the detection target, and a tracking step of tracking the detection target in the region of interest on the basis of the second image signal and a result of the detection by the detection step on the basis of the first image signal associated with the second image signal.

According to still another aspect of the present invention, provided is an information processing program for causing a computer to implement a function of receiving a first image signal acquired by a first image sensor, a function of receiving a second image signal generated by a second image sensor that includes an event driven vision sensor that asynchronously generates an image signal when an intensity change in light incident to each pixel is detected, a function of detecting a detection target on the basis of the first image signal;
a function of setting a region of interest including at least a part of the detection target, a function of tracking the detection target in the region of interest on the basis of the second image signal, and a function of comparing position information on the detection target represented by a result of the detection on the basis of the first image signal with position information on the detection target represented by a result of the tracking on the basis of the second image signal associated with the first image signal.

According to the above-mentioned configurations, the tracking can be carried out precisely while suppressing latency by use of the sensor which synchronously generates the image signal and the event driven vision sensor to carry out the tracking.

According to still another aspect of the present invention, an information processing program for causing a computer to implement a function of receiving a first image signal acquired by a first image sensor, a function of receiving a second image signal generated by a second image sensor that includes an event driven vision sensor that asynchronously generates an image signal when an intensity change in light incident to each pixel is detected, a function of detecting a detection target on the basis of the first image signal, a function of setting a region of interest including at least a part of the detection target, and a function of tracking the detection target in the region of interest on the basis of the second image signal and a result of the detection on the basis of the first image signal associated with the second image signal.

### [Brief Description of Drawings]

[FIG. 1]

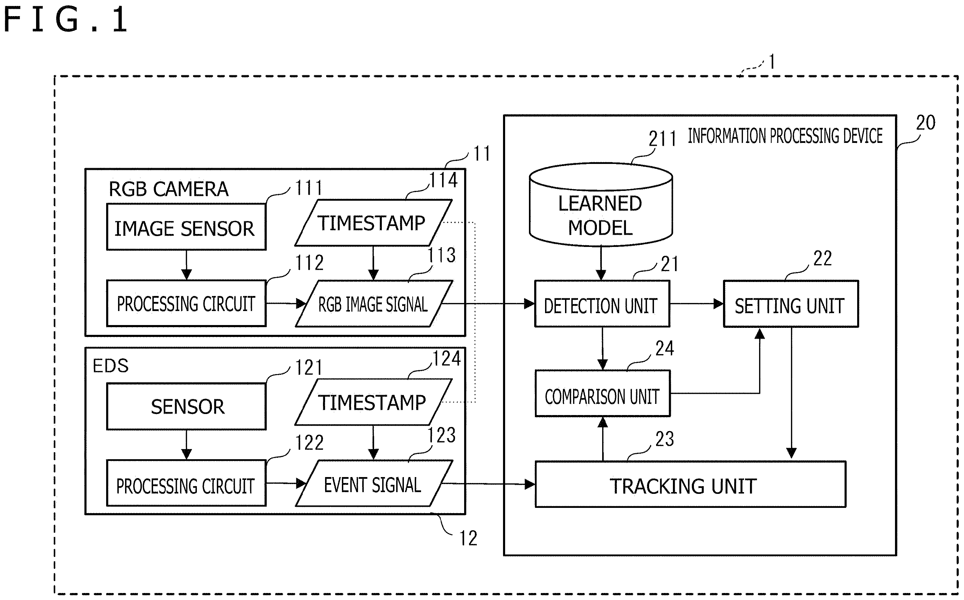

   FIG. 1 is a block diagram for depicting a schematic configuration of a system according to an embodiment of the present invention.
[FIG. 2]

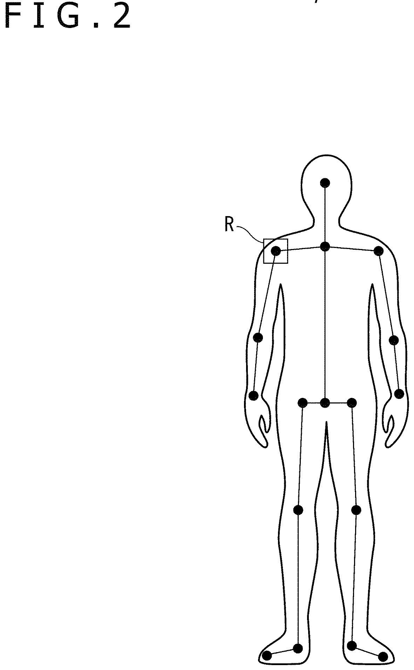

   FIG. 2 is a diagram for depicting an example of detection of a person in the embodiment of the present invention.
[FIG. 3]

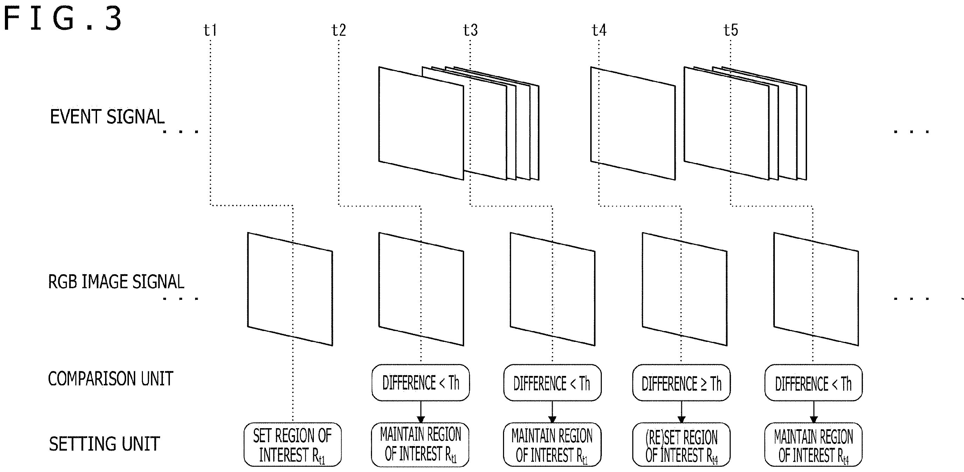

   FIG. 3 is a diagram for depicting a relation between an RGB image signal and an event signal in the embodiment of the present invention.
[FIG. 4]

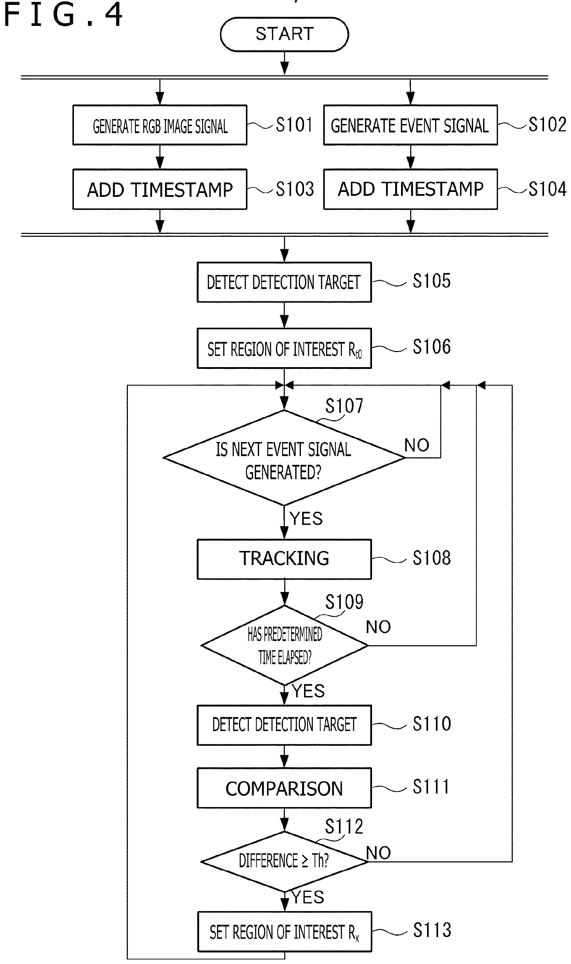

   FIG. 4 is a flowchart for depicting an example of a processing method according to the embodiment of the present invention.
[FIG. 5]

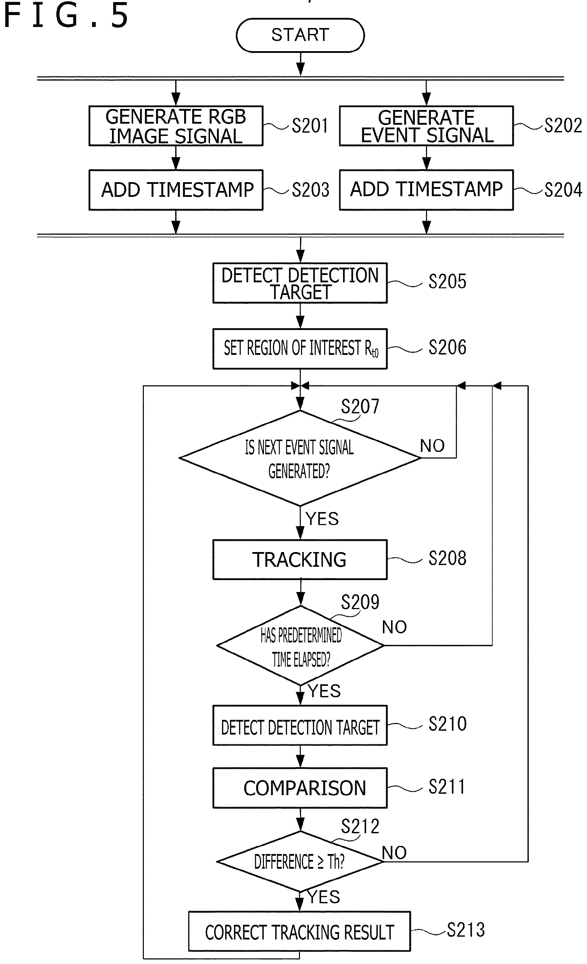

   FIG. 5 is another flowchart for depicting the example of the processing method according to the embodiment of the present invention.

### [Description of Embodiments]

Several embodiments of the present invention are now described in detail with reference to the accompanying drawings. Note that components having substantially identical functional configurations in the present description and the drawings are given identical reference signs to omit a redundant description.

FIG. 1 is a block diagram for depicting a schematic configuration of a system according to one embodiment of the present invention.

A system 1 includes an RGB camera 11, an EDS (Event Driven Sensor) 12, and an information processing device 20. The RGB camera 11 includes an image sensor 111 which is a first image sensor and a processing circuit 112 which is connected to the image sensor 111. The image sensor 111 synchronously scans all pixels, for example, at a predetermined cycle or at a predetermined timing corresponding to a user operation, to thereby generate an RGB image signal 113. The processing circuit 112 converts, for example, the RGB image signal 113 to a form appropriate for storage and transmission. Moreover, the processing circuit 112 adds a timestamp 114 to the RGB image signal 113.

The EDS 12 is an example of a second vision sensor which generates an event signal when the sensor detects an intensity change in light and includes a sensor 121 which is a second image sensor forming a sensor array and a processing circuit 122 connected to the sensor 121. The sensor 121 is an event driven vision sensor which includes a light reception element and generates an event signal 123 when an intensity change in light incident to each pixel, more specifically, a luminance change exceeding a predetermined value defined in advance is detected. The sensor 121 does not generate the event signal 123 when an intensity change in incident light is not detected, and hence, the event signal 123 is generated asynchronously in the EDS 12. The event signal 123 output via the processing circuit 122 includes identification information (for example, a position of the pixel) on the sensor 121, a polarity of the luminance change (an increase or a decrease), and a timestamp 124. Moreover, the EDS 12 can generate the event signal 123 at a frequency much higher than a generation frequency (a frame rate of the RGB camera 11) of the RGB image signal 113 when the luminance change is detected. Note that a signal on the basis of which an image can be built is herein referred to as an image signal. Thus, the RGB image signal 113 and the event signal 123 represent examples of the image signal.

In the present embodiment, the timestamp 114 added to the RGB image signal 113 and the timestamp 124 added to the event signal 123 are synchronized with each other. Specifically, for example, the timestamp 114 can be synchronized with the timestamp 124 by providing time information used to generate the timestamp 124 in the EDS 12 to the RGB camera 11. As another example, when pieces of time information used to generate the timestamps 114 and 124 are independent of each other between the RGB camera 11 and the EDS 12, the timestamp 114 and the timestamp 124 can be synchronized with each other later by calculating an offset amount between the timestamps with reference to a time at which a specific event (for example, a change in subject over an entire image) occurs.

Moreover, the sensor 121 of the EDS 12 is associated with one or a plurality of pixels of the RGB image signal 113 through a calibration procedure between the RGB camera 11 and the EDS 12 carried out in advance in the present embodiment, and hence the event signal 123 is generated in correspondence to the intensity change in light in the one or plurality of pixels of the RGB image signal 113. More specifically, the sensor 121 can be associated with the one or plurality of pixels of the RGB image signal 113 by, for example, capturing a common calibration pattern by the RGB camera 11 and the EDS 12, to thereby calculate correspondence parameters between the camera and the sensor from respective internal parameters and external parameters of the RGB camera 11 and the EDS 12.

The information processing device 20 is implemented by, for example, a computer including a communication interface, a processor, and a memory and includes a function of each of a detection unit 21, a setting unit 22, a tracking unit 23, and a comparison unit 24, which are implemented by the processor operating according to a program stored in the memory or received via the communication interface. A description is now further given of the function of each unit.

The detection unit 21 detects a detection target on the basis of the RGB image signal generated by the image sensor 111, which is the first image sensor. In the present embodiment, a case in which the detection target is a person is described as an example. The detection unit 21 calculates coordinate information on at least one joint of the person who is the detection target.

FIG. 2 is a view for describing an example of the detection of the person. The detection unit 21 calculates coordinate information on the plurality of joints of the person as depicted in FIG. 2. In the example of FIG. 2, there is depicted an example in which coordinate information on joints at 17 positions such as the head, the shoulders, the elbows, the wrists, the knees, the ankles, and the toes.

The detection unit 21 calculates, on the basis of, for example, a learned model 211, the coordinate information indicating the positions of the plurality of joints of a user from the RGB image signal 113. The learned model 211 can be built in advance by carrying out, for example, supervised learning having, as input data, an image of a person having the plurality of joints and, as correct answer data, the coordinate information indicating the positions of the plurality of joints of the person. Note that publicly-known various technologies can be used as a specific method for the machine learning and hence a detailed description thereof is omitted. Moreover, there may be provided such a configuration that the detection unit 21 includes a relation learning unit, and the relation learning unit learns, each time the RGB image signal 113 is input, a relation between the image on the basis of the input RGB image signal 113 and the coordinate information representing the positions of the joints, to thereby update the learned model 211.

Moreover, the event signal 123 may be used for the processing by the detection unit 21. For example, an object which is present in a continuous pixel region indicating an occurrence of events having the same polarity in the event signal 123 may be detected as a person, and the detection processing descried above may be carried out for a corresponding portion of the RGB image signal 113.

The setting unit 22 sets a region of interest including at least a part of the detection target. The region of interest is a region including at least a part of the detection target, and is an attention attracting region which is a target of tracking described later. The setting unit 22 sets, for each joint of the person detected by the detection unit 21, a square in a predetermined size having the center at the joint as a region of interest R, for example, as depicted in FIG. 2. Note that the region of interest R is depicted only at the joint of the one shoulder in the example of FIG. 2, but the setting unit 22 may set the region of interest R to each of all of the joints of the person detected by the detection unit 21, or may set the region of interest R to only a part of the joints. The user may be allowed to specify a joint to which the region of interest R is to be set.

The tracking unit 23 tracks the detection target in the region of interest R set by the setting unit 22 on the basis of the event signal 123 generated by the sensor 121 which is the second image sensor. In the EDS 12, a luminance change occurs in a case in which the position or the posture of the person who is the user changes, for example, and the event signal 123 is generated by the sensor 121 at a pixel address at which this luminance change has occurred. Thus, the position itself of the event signal 123 in a region corresponding to the region of interest R set by the setting unit 22 corresponds to coordinate information on the detection target, and hence the tracking unit 23 tacks the detection target on the basis of the position of occurrence, the polarity, and the like of the event signal 123. Moreover, the event signal 123 is asynchronously generated in time, and hence the tracking unit 23 carries out the tracking as needed at a timing at which the event signal 123 is generated.

Note that, when a plurality of regions of interest R are set by the setting unit 22, the tracking unit 23 carries out the tracking for each region of interest.

The comparison unit 24 compares the position information on the detection target represented by the result of the detection by the detection unit 21 on the basis of the RGB image signal 113 and the position information on the detection target represented by the result of the tracking by the tracking unit 23 on the basis of the event signal 123 associated with the RGB image signal 113 with each other.

As described before, the detection unit 21 calculates the coordinate information on the joint of the person who is the detection target on the basis of the RGB image signal 113, and the tracking unit 23 acquires the coordinate information on the joint of this person as a result of the tracking on the basis of the event signal 123.

FIG. 3 is a diagram for depicting a relation between the RGB image signal 113 and the event signal 123.

As depicted in FIG. 3, the RGB image signal 113 is generated at the predetermined cycle while the event signal 123 is generated asynchronously in time. Moreover, the event signal 123 is generated at a much higher frequency than the generation frequency (the frame rate of the RGB camera 11) of the RGB image signal 113. In the example of FIG. 3, there is exemplified a case in which the event signal 123 is generated in the neighborhoods of times t3 and t5. As depicted in FIG. 3, the event signal 123 has relatively high immediacy, and is generated only when the luminance change is detected. Meanwhile, the RGB image signal 113 is generated later than the event signal 123 and at the constant cycle.

The comparison unit 24, for the comparison described above, obtains, for example, a difference between the coordinate information calculated in the detection by the detection unit 21 on the basis of the RGB image signal 113 and the coordinate information obtained as a result of the tracking by the tracking unit 23 on the basis of the event signal 123 associated with the RGB image signal 113. The comparison unit 24 selects the event signal 123 having the added timestamp 124 the same as or close to the timestamp 114 added to the RGB image signal 113, and obtains a difference between the coordinate information calculated on the basis of the RGB image signal 113 and the coordinate information obtained by the tracking on the basis of the event signal 123.

When the difference is less than a predetermined threshold value Th, it can be determined that the tracking by the tracking unit 23 is correctly being carried out. Meanwhile, when the difference is equal to or more than the predetermined threshold value Th, it can be determined that the tracking by the tracking unit 23 is not correctly being carried out. When the difference is equal to or more than the predetermined threshold value Th, for example, the motion of the detection target is likely not appropriately reflected to the event signal 123, or a precision of the tracking has likely decreased due to generation of the event signal 123 as a result of a quick luminance change or the like while the detection target does not actually move. In this case, the setting unit 22 again sets the region of interests on the basis of the detection result of the detection unit 21.

The comparison by the comparison unit 24 may be carried out at any timing, but there is considered a case in which the comparison by the comparison unit 24 is carried out according to the frame rate of the RGB image signal 113 in the example of FIG. 3.

When the detection unit 21 detects a detection target on the basis of the RGB image signal 113 generated at a time t1 and the setting unit 22 sets a region of interest Rₜ₁, the tracking unit 23 carries out the tracking of the detection target in the region of interest Rₜ₁.

The comparison unit 24 carries out the comparison on the basis of the RGB image signal 113 and the event signal 123 generated at times t2 and t3. When the difference is less than the predetermined threshold value Th, the region of interest Rₜ₁ is maintained, and the tracking of the detection target in the region of interest Rₜ₁ by the tracking unit 23 is continued.

The comparison unit 24 carries out the comparison on the basis of the RGB image signal 113 and the event signal 123 generated at a time t4. When the difference is equal to or more than the predetermined threshold value Th, the setting unit 22 sets a region of interest Rₜ₄ in place of the region of interest Rₜ₁, and the tracking of the detection target in the region of interest Rₜ₄ by the tracking unit 23 is started.

Note that the region of interest suddenly changes in a case in which the position of the region of interest Rₜ₁ and the position of the region of interest Rₜ₄ are greatly different from each other when the setting unit 22 sets the region of interest Rₜ₄ in place of the region of interest Rₜ₁. In this case, there may be provided such a configuration that the setting unit 22 gradually or stepwise changes the region of interest from the region of interest Rₜ₁ to the region of interest Rₜ₄. Further, a method for changing the region of interest by the setting unit 22 may be changed according to the difference obtained by the comparison unit 24, that is, the difference between the coordinate information calculated on the basis of the RGB image signal 113 and the coordinate information obtained by the tracking on the basis of the event signal 123.

As described above, when the difference is less than the predetermined threshold value Th, the tracking of the detection target in the region of interest set by the setting unit 22 is effective, and hence the region of interest is maintained. When the difference is equal to or more than the predetermined threshold value Th, the tracking of the detection target in the region of interest set by the setting unit 22 is highly likely ineffective, and hence the setting unit 22 again sets the region of interest.

FIG. 4 is a flowchart for depicting an example of processing of the system 1 according to one embodiment of the present invention. In the depicted example, the RGB camera 11 generates the RGB image signal 113 (step S101), and the EDS 12 simultaneously generates the event signal 123 (step S102). Note that step S102 for generating the event signal 123 is carried out only when the sensor 121 associated with the one or the plurality of pixels of the RGB image signal 113 detects an intensity change in light. The timestamp 114 is added to the RGB image signal 113 (step S103). The timestamp 124 is added to the event signal (step S104).

Then, the detection unit 21 detects the detection target from the RGB image signal 113 (step S105). The setting unit 22 sets a region of interest Rₜ₀ as an initial region of interest R (step S106).

Then, when the event signal 123 is generated (Yes in step S107), the tracking unit 23 tracks the detection target in the region of interest R on the basis of the event signal 123 (step S108).

Then, the tracking unit 23 carries out the tracking each time the event signal 123 is generated until a predetermined time elapses. When the predetermined time has elapsed (YES in step S109), the detection unit 21 detects the detection target from the RGB image signal 113 (step S110).

The comparison unit 24 carries out the comparison (step S111). While the difference is less than the predetermined threshold value Th (NO in step S112), the processing from step S107 to the processing in step S112 are repeated. When the comparison unit 24 determines that the difference is equal to or more than the threshold value Th (YES in step S112), the setting unit 22 sets the region of interest R_{X} as the region of interest R on the basis of the detection result in step S110 (step S113).

Each unit of the information processing device 20 repeats the processing from steps S107 to the processing in S113 above (the processing from steps S101 to the processing in S104 are also repeated, but this processing does not necessarily have the same cycle as that from step S107 to step S113), to thereby carry out the tracking while the maintenance and the resetting of the region of interest R are carried out at an appropriate timing. Thus, the tracking can be carried out precisely while latency is suppressed.

FIG. 5 is a flowchart for depicting another example of the processing of the system 1 according to one embodiment of the present invention. In the depicted example, in place of the resetting of the region of interest R, the tracking unit 23 corrects the tracking result.

In FIG. 5, each of processing in step S201 to processing in step S211 is the same as each of the processing in step S101 to the processing in step 5111 of FIG. 4, and a description thereof is therefore omitted.

When it is determined that the difference is equal to or more than the predetermined threshold value Th (YES in step S212), the tracking unit 23 corrects the result of the tracking in step S208 (step S213). The tracking unit 23 applies smoothing processing, deformation processing, and the like to the coordinate information obtained as a result of the tracking, for example, according to the magnitude of the difference resulting from the comparison in step S211, making it possible to correct, on the basis of the RGB image signal 113, the result of the tracking on the basis of the event signal 123. For example, when the orientation and the position of the fingertips or a portion beyond the elbow of the person who is the detection target change, the result of the tracking on the basis of the event signal 123 likely deviates from the result of the detection by the detection unit 21 on the basis of the RGB image signal 113. In this case, there occurs separation between the position information on the detection target represented by the result of the detection by the detection unit 21 on the basis of the RGB image signal 113 and the position information on the detection target represented by the result of the tracking by the tracking unit 23 on the basis of the event signal 123 associated with the RGB image signal 113. For example, the tracking unit 144 corrects the result of the tracking by the tracking unit 144 on the basis of the position information on the basis of the RGB image signal 113, to thereby be capable of correcting the result of the tracking later while carrying out the tracking. Thus, the precise tracking can continuously be carried out.

Each unit of the information processing device 20 repeats the processing from step S207 to the processing in step S213, to thereby be capable of correcting the result of the tracking according to a possibility of the decrease in precision of the tracking. Thus, the tracking can be carried out precisely while the latency is suppressed.

Note that there may be provided such a configuration that both the resetting of the region of interest R described with reference to FIG. 4 and the correction of the tracking result described with reference to FIG. 5 are carried out, or such a configuration that any one thereof is carried out according to a predetermined condition. Further, in addition to or in place of the resetting of the region of interest R described with reference to FIG. 4 and the correction of the tracking result described with reference to FIG. 5, other kinds of processing may be carried out according to the result of the comparison by the comparison unit 24. For example, reliability and the like of the tracking may be evaluated according to the comparison result.

The one embodiment of the present invention as described above includes the detection unit 21 that detects a detection target on the basis of the RGB image signal which is a first image signal, generated by the image sensor 111 which is the first image sensor, the setting unit 22 that sets a region of interest including at least a part of the detection target, and the tracking unit 23 that tracks the detection target in the region of interest on the basis of the event signal 123 which is a second image signal generated by the sensor 121 which is the second image sensor and the result of the detection by the detection unit 21 on the basis of the RGB image signal 113 associated with the event signal 123.

Thus, it is possible to set the region of interest on the basis of the RGB image signal 113 having a relatively large information amount, and to track the detection target in the region of interest on the basis of the event signal 123 having a relatively high temporal resolution and the result of the detection by the detection unit 21 on the basis of the RGB image signal 113 associated with the event signal 123.

Moreover, one embodiment of the present invention includes the comparison unit 24 which compares the position information on the detection target represented by the result of the detection by the detection unit 21 on the basis of the RGB image signal 113 and the position information on the detection target represented by the result of the tracking by the tracking unit 23 on the basis of the event signal 123 associated with the RGB image signal 113 with each other. Thus, effectiveness of the tracking can continuously be recognized. Moreover, the tracking on the basis of the event signal 123 enables effective use of characteristics of the event driven vision sensor such as a wide dynamic range, the high temporal resolution, and a characteristic independent of background, thereby making possible to carry out the tracking. Thus, it is possible to increase the temporal resolution and the spatial resolution, and accordingly, the tracking can be carried out precisely while suppressing the latency.

Moreover, according to one embodiment of the present invention, the setting unit 22 resets the region of interest R on the basis of the comparison result of the comparison unit 24 when the difference is more than the predetermined threshold value Th. Thus, the tracking can be carried out while maintaining and resetting the region of interest R at the appropriate timing. Thus, the precise tracking can continuously be carried out.

Moreover, one embodiment of the present invention further includes a correction unit which corrects the result of the tracking by the tracking unit 23 on the basis of the result of the comparison by the comparison unit 24. Thus, it is possible to provide a similar effect to that in the above-mentioned case in which the region of interest R is reset.

Moreover, in one embodiment of the present invention, the detection target is a person, the detection unit 21 calculates the coordinate information on at least one joint of the person, and the setting unit 22 sets the region of interest to each joint of the person. Thus, it is possible to precisely carry out the tracking while setting a person as the detection target and suppressing the latency.

Note that the result of the tracking described in the one embodiment of the present invention may be used in any way. For example, the result may be used for a mirroring system which reproduces a motion of a user by a robot or the like, a rendering system which uses the motion of the user for rendering a CG (Computer Graphics) model, a gaming system which receives a user operation in a manner similar to that of a controller, and the like. For example, when the present invention is used for the mirroring system, more detailed and highly precise tracking can be achieved through the increases in the temporal resolution and the spatial resolution, and hence a smoother and finer motion can be reproduced in the robot.

Moreover, the present invention can similarly be applied also to tracking having, as the detection target, for example, a predetermined vehicle, a machine, a living organism, or the like other than the human and tracking having, as the detection target, a predetermined marker or the like.

Moreover, in the detection unit 21 in the information processing device 20 described in the above example, there is depicted the example in which the detection target is detected from the RGB image signal 113 through use of the method of the machine learning, but there may be provided such a configuration that another method is used to detect the detection target in place of the machine learning or in addition to the machine learning. For example, a publicly-known method such as the block matching and the gradient method may be used to detect the detection target from the RGB image signal 113.

Moreover, the system 1 described in the above-mentioned example may be implemented in a signal device or implemented in a plurality of devices in a distributed manner. For example, the system 1 may be a system formed of a camera unit including the RGB camera 11 and the EDS 12, and the information processing device 20.

While the several embodiments of the present invention have been described above in detail with reference to the accompanying drawings, the present invention is not limited to these examples. It is obvious that various modification examples and correction examples within the scope of the technical ideas described in the scope of claims may be conceived of by those having ordinary knowledge in the technical field to which the present invention belongs. Needless to say, it is understood that these examples also belong to the technical scope of the present invention.

### [Reference Signs List]

- 1:: System
- 11:: RGB camera
- 12:: EDS
- 20:: Information processing device
- 21:: Detection unit
- 22:: Setting unit
- 23:: Tracking unit
- 24:: Comparison unit
- 111:: Image sensor
- 112, 122:: Processing circuit
- 113:: RGB Image signal
- 114, 124:: Timestamp
- 121:: Sensor
- 123:: Event signal
- 211:: Learned model

## Claims

1. An information processing device comprising:
a detection unit that detects a detection target on a basis of a first image signal generated by a first image sensor;
a setting unit that sets a region of interest including at least a part of the detection target;
a tracking unit that tracks the detection target in the region of interest on a basis of a second image signal generated by a second image sensor including an event driven vision sensor that asynchronously generates an image signal when an intensity change in light incident to each pixel is detected; and
a comparison unit that compares position information on the detection target represented by a result of the detection by the detection unit on the basis of the first image signal with position information on the detection target represented by a result of the tracking by the tracking unit on the basis of the second image signal associated with the first image signal.

2. The information processing device according to claim 1,
wherein the setting unit sets the region of interest again when a difference is more than a predetermined threshold value on a basis of a result of the comparison by the comparison unit.

3. The information processing device according to claim 1 or claim 2, further comprising:
a correction unit that corrects the result of the tracking by the tracking unit on a basis of a result of the comparison by the comparison unit.

4. The information processing device according to any one of claim 1 to claim 3,
wherein the detection target is a person,
the detection unit calculates coordinate information on at least one joint of the person, and
the setting unit sets the region of interest for each joint of the person.

5. An information processing device comprising:
a detection unit that detects a detection target on a basis of a first image signal generated by a first image sensor;
a setting unit that sets a region of interest including at least a part of the detection target; and
a tracking unit that tracks the detection target in the region of interest on a basis of a second image signal generated by a second image sensor including an event driven vision sensor that asynchronously generates an image signal when an intensity change in light incident to each pixel is detected and a result of the detection by the detection unit on the basis of the first image signal associated with the second image signal.

6. The information processing device according to claim 5, further comprising:
a comparison unit that compares position information on the detection target represented by the result of the detection by the detection unit on the basis of the first image signal with position information on the detection target represented by a result of the tracking by the tracking unit on the basis of the second image signal associated with the first image signal.

7. A system comprising:
an information processing device that includes
a first image sensor that generates a first image signal,
a second image sensor that includes an event driven vision sensor that asynchronously generates a second image signal when an intensity change in light incident to each pixel is detected,
a detection unit that detects a detection target on a basis of the first image signal,
a setting unit that sets a region of interest including the detection target,
a tracking unit that tracks the detection target in the region of interest on a basis of the second image signal, and
a comparison unit that compares position information on the detection target represented by a result of the detection by the detection unit on the basis of the first image signal with position information on the detection target represented by a result of the tracking by the tracking unit on the basis of the second image signal associated with the first image signal.

8. A system comprising:
an information processing device that includes a first image sensor that generates a first image signal,
a second image sensor that includes an event driven vision sensor that asynchronously generates a second image signal when an intensity change in light incident to each pixel is detected,
a detection unit that detects a detection target on a basis of the first image signal,
a setting unit that sets a region of interest including the detection target, and
a tracking unit that tracks the detection target in the region of interest on a basis of the second image signal and a result of the detection by the detection unit on the basis of the first image signal associated with the second image signal.

9. The system according to claim 8,
wherein the information processing device further includes a comparison unit that compares position information on the detection target represented by the result of the detection by the detection unit on the basis of the first image signal with position information on the detection target represented by a result of the tracking by the tracking unit on the basis of the second image signal associated with the first image signal.

10. An information processing method comprising:
a first reception step of receiving a first image signal acquired by a first image sensor;
a second reception step of receiving a second image signal generated by a second image sensor that includes an event driven vision sensor that asynchronously generates an image signal when an intensity change in light incident to each pixel is detected;
a detection step of detecting a detection target on a basis of the first image signal;
a setting step of setting a region of interest including at least a part of the detection target;
a tracking step of tracking the detection target in the region of interest on a basis of the second image signal; and
a comparison step of comparing position information on the detection target represented by a result of the detection by the detection step on the basis of the first image signal with position information on the detection target represented by a result of the tracking by the tracking step on the basis of the second image signal associated with the first image signal.

11. An information processing method comprising:
a first reception step of receiving a first image signal acquired by a first image sensor;
a second reception step of receiving a second image signal generated by a second image sensor that includes an event driven vision sensor that asynchronously generates an image signal when an intensity change in light incident to each pixel is detected;
a detection step of detecting a detection target on a basis of the first image signal;
a setting step of setting a region of interest including at least a part of the detection target; and
a tracking step of tracking the detection target in the region of interest on a basis of the second image signal and a result of the detection by the detection step on the basis of the first image signal associated with the second image signal.

12. The information processing method according to claim 11, further comprising:
a comparison step of comparing position information on the detection target represented by a result of the detection by the detection step on the basis of the first image signal with position information on the detection target represented by a result of the tracking by the tracking step on the basis of the second image signal associated with the first image signal.

13. An information processing program for causing a computer to implement:
a function of receiving a first image signal acquired by a first image sensor;
a function of receiving a second image signal generated by a second image sensor that includes an event driven vision sensor that asynchronously generates an image signal when an intensity change in light incident to each pixel is detected; a function of detecting a detection target on a basis of the first image signal;
a function of setting a region of interest including at least a part of the detection target;
a function of tracking the detection target in the region of interest on a basis of the second image signal; and
a function of comparing position information on the detection target represented by a result of the detection on the basis of the first image signal with position information on the detection target represented by a result of the tracking on the basis of the second image signal associated with the first image signal.

14. An information processing program for causing a computer to implement:
a function of receiving a first image signal acquired by a first image sensor;
a function of receiving a second image signal generated by a second image sensor that includes an event driven vision sensor that asynchronously generates an image signal when an intensity change in light incident to each pixel is detected; a function of detecting a detection target on a basis of the first image signal;
a function of setting a region of interest including at least a part of the detection target; and
a function of tracking the detection target in the region of interest on a basis of the second image signal and a result of the detection on the basis of the first image signal associated with the second image signal.

15. The information processing program according to claim 14, further comprising:
a function of comparing position information on the detection target represented by the result of the detection on a basis of the first image signal with position information on the detection target represented by the result of the tracking on the basis of the second image signal associated with the first image signal.
